# EUROPEAN PATENT APPLICATION

(11) **EP 4 576 708 A1**
(43) Date of publication of application: **25.06.2025**
(21) Application number: 23868538.2
(22) Date of filing: 18.09.2023
(51) Int. Cl.: H04L 41/5067, H04L 43/062, H04W 24/08, H04W 24/10

(54) **METHOD AND DEVICE FOR QOE MEASUREMENT OF MULTI-MODAL TRAFFIC IN NEXT-GENERATION MOBILE COMMUNICATION SYSTEM**

(30) Priority: 19.09.2022 KR 20220117674
(71) Applicant: Samsung Electronics Co., Ltd., Suwon-si, Gyeonggi-do 16677 (KR)
(72) Inventor: JEONG, Seungbeom, Suwon-si, Gyeonggi-do 16677 (KR); KANG, Hyunjeong, Suwon-si, Gyeonggi-do 16677 (KR); LEE, Taeseop, Suwon-si, Gyeonggi-do 16677 (KR)
(74) Representative: Gulde & Partner
(86) International application number: PCT/KR2023/014093
(87) International publication number: WO 2024/063486

(57) **Abstract**

The disclosure relates to a 5G or 6G communication system for supporting a higher data transmission rate. More specifically, the present disclosure relates to a method and a device for terminal and base station operations relating to QoE measurement of multi-modal traffic in a next-generation mobile communication system. The method of the present disclosure comprises the steps of: receiving, from a user equipment (UE), a UE capability message including information indicating whether quality of experience (QoE) measurement associated with multi-modal traffic is supported; receiving, from an operations administration and maintenance (OAM), a message including quality of experience (QoE) measurement configuration information associated with multi-modal traffic; transmitting a first radio resource control (RRC) message including the QoE measurement configuration information to the UE; receiving, from the UE, a QoE measurement report including a QoE measurement result obtained on the basis of the QoE measurement configuration information; and transmitting the QoE measurement report to a server.

## Description

### [Technical Field]

The disclosure relates to a next generation mobile communication system, and more specifically, to a method and device for terminal and base station operations for QoE measurement of multi-modal traffic in a next generation mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies..

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service..

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure provides a method of measuring QoE of multi-modal traffic in a next generation mobile communication system.

### [Solution to Problem]

In the disclosure for solving the above problems, a method performed by a base station in a wireless communication system may include receiving, from a user equipment (UE), a UE capability message including information indicating whether quality of experience (QoE) measurement associated with multi-modal traffic is supported; receiving, from an operations administration and maintenance (OAM), a message including QoE measurement configuration information associated with multi-modal traffic; transmitting, to the UE, a first radio resource control (RRC) message including the QoE measurement configuration information; receiving, from the UE, a QoE measurement report including a QoE measurement result performed based on the QoE measurement configuration information; and transmitting, to a server, the measurement result report.

In an embodiment, the UE may be an anchor device connected to a plurality of eXtended Reality (XR) devices, and the multi-modal traffic may be transmitted between the base station and the plurality of XR devices connected to the anchor device.

In an embodiment, the multi-modal traffic may be composed of a multi-modal protocol data unit (PDU) set group,

The QoE measurement report may include at least one of an identifier of the multi-modal PDU set group, an identifier of the PDU set, information on whether the multi-modal PDU set group was successfully restored, or PDU loss information.

In an embodiment, the UE may be composed of one XR device, the multi-modal traffic may be composed of a plurality of single modal traffic, and the single modal traffic may be transmitted between the base station and one UE.

Further, in another embodiment of the disclosure, a method performed by a user equipment (UE) in a wireless communication system may include transmitting, to a base station, a UE capability message including information indicating whether quality of experience (QoE) measurement associated with multi-modal traffic is supported; receiving, from the base station, a first radio resource control (RRC) message including QoE measurement configuration information associated with the multi-modal traffic; performing QoE measurement based on the QoE measurement configuration information; and transmitting, to the base station, a QoE measurement report including a result of the performed QoE measurement.

Further, in another embodiment of the disclosure, a base station may include a transceiver capable of transmitting and receiving at least one signal; and a controller coupled with the transceiver, wherein the controller may be configured to receive, from a user equipment (UE), a UE capability message including information indicating whether quality of experience (QoE) measurement associated with multi-modal traffic is supported, to receive, from an operations administration and maintenance (OAM), a message including QoE measurement configuration information associated with multi-modal traffic, to transmit, to the UE, a first radio resource control (RRC) message including the QoE measurement configuration information, to receive, from the UE, a QoE measurement report including a QoE measurement result performed based on the QoE measurement configuration information, and to transmit, to a server, the measurement result report.

Further, in another embodiment of the disclosure, a user equipment (UE) may include a transceiver capable of transmitting and receiving at least one signal; and a controller coupled with the transceiver, wherein the controller may be configured to transmit, to a base station, a UE capability message including information indicating whether quality of experience (QoE) measurement associated with multi-modal traffic is supported; to receive, from the base station, a first radio resource control (RRC) message including QoE measurement configuration information associated with multi-modal traffic; to perform QoE measurement based on the QoE measurement configuration information; and to transmit, to the base station, a QoE measurement report including a result of the performed QoE measurement.

### [Advantageous Effects of Invention]

According to an embodiment of the disclosure, QoE measurement of multi-modal traffic can be performed more efficiently in a next generation mobile communication system.

### [Brief Description of Drawings]

FIG. 1 is a diagram illustrating a structure of a next generation mobile communications system.
FIG. 2 is a diagram illustrating wireless access state transition in a next generation mobile communication system.
FIG. 3 is a message flow diagram illustrating a procedure for configuring/reporting signaling-based QoE measurement in the disclosure.
FIG. 4 is a message flow diagram illustrating a procedure for configuring/reporting management-based QoE measurement in the disclosure.
FIG. 5 is a message flow diagram illustrating configuration and report procedures of RAN visible QoE measurement.
FIG. 6 is a diagram illustrating a first network scenario for supporting QoE measurement of multi-modal traffic in an embodiment of the disclosure.
FIG. 7 is a diagram illustrating a user's QoE for multi-modal traffic in an embodiment of the disclosure.
FIG. 8 is a diagram illustrating a concept of a multi-modal PDU set group in an embodiment of the disclosure.
FIG. 9 is a diagram illustrating a second network scenario for supporting QoE measurement of multi-modal traffic in an embodiment of the disclosure.
FIG. 10 is a block diagram illustrating an internal structure of a UE to which the disclosure is applied.
FIG. 11 is a block diagram illustrating a constitution of a base station according to the disclosure.

### [Mode for the Invention]

In the following description, in describing the disclosure, in the case that it is determined that a detailed description of a related well-known function or constitution may unnecessarily obscure the gist of the disclosure, a detailed description thereof will be omitted. Hereinafter, an embodiment of the disclosure will be described with reference to the accompanying drawings.

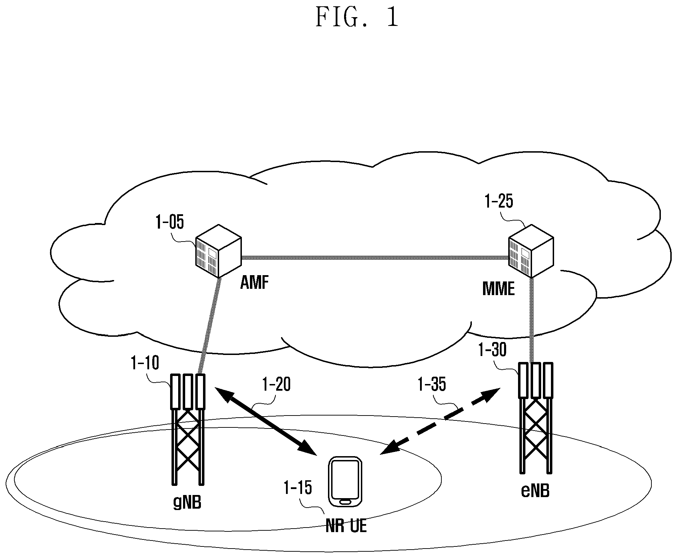

FIG. 1 is a diagram illustrating a structure of a next generation mobile communications system.

With reference to FIG. 1, as illustrated, a wireless access network of a next generation mobile communication system (new radio (NR)) is composed of a new radio node B (hereinafter, gNB) 1-10 and an AMF 1-05 (new radio core network). A new radio user equipment (hereinafter, NR UE or terminal) 1-15 accesses an external network through the gNB 1-10 and the AMF 1-05.

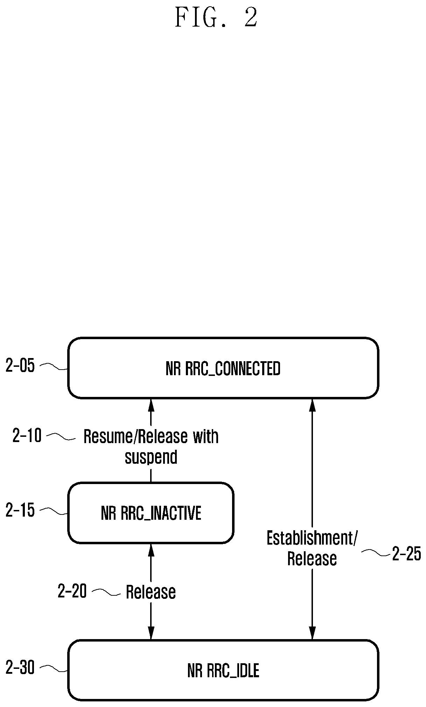

In FIG. 1, the gNB corresponds to an evolved node B (eNB) of the existing LTE system. The gNB is connected to the NR UE through a wireless channel and may provide better services than that of the existing node B (1-20). In the NR, because all user traffic is serviced through a shared channel, a device that collects status information such as a buffer status, available transmission power status, and channel status of UEs and that performs scheduling is required, and this is handled by the gNB 1-10. One gNB usually controls a plurality of cells. In order to implement ultra-high speed data transmission compared to the existing LTE, the NR may have a bandwidth higher than the existing maximum bandwidth, and a beamforming technology may be additionally applied using orthogonal frequency division multiplexing (hereinafter, referred to as OFDM) as radio access technology. Further, an adaptive modulation & coding (hereinafter, referred to as AMC) scheme that determines a modulation scheme and a channel coding rate according to a channel status of the UE is applied. The AMF 1-05 performs functions such as mobility support, bearer configuration, and QoS configuration. The AMF is a device that handles various control functions as well as mobility management functions for UEs and is connected to a plurality of base stations. Further, the NR may be linked with the existing LTE system, and the AMF is connected to an MME 1-25 through a network interface. The MME is connected to an eNB 1-30, which is an existing base station. A UE that supports LTE-NR dual connectivity may transmit and receive data while maintaining connection to not only a gNB but also an eNB (1-35). FIG. 2 is a diagram illustrating wireless access state transition in NR.

The NR has three types of radio access states (RRC states). A connected mode (RRC_CONNECTED, 2-05) is a radio access state in which the UE may transmit and receive data. An idle mode (RRC_IDLE, 2-30) is a radio access state in which the UE monitors whether paging is transmitted to itself. The two modes are radio access states that are also applied to the existing LTE system, and the detailed technology thereof is the same as that of the existing LTE system. The NR newly defines an inactive (RRC_INACTIVE) radio access state (2-15). In the radio access state, an UE context is maintained in the base station and the UE, and RAN-based paging is supported. Characteristics of the new radio access state are listed as follows.
- Cell re-selection mobility;
- CN - NR RAN connection (both C/U-planes) has been established for UE;
- The UE AS context is stored in at least one gNB and the UE;
- Paging is initiated by NR RAN;
- RAN-based notification area is managed by NR RAN;
- NR RAN knows the RAN-based notification area which the UE belongs to;

The new INACTIVE radio access state may be changed to a connected mode or idle mode using specific procedures. The INACTIVE mode is switched to a connected mode according to a resume process, and the connected mode is switched to the INACTIVE mode using a release procedure including suspend configuration information (2-10). In the above procedure, one or more RRC messages are transmitted and received between the UE and the base station, and the above procedure is composed of one or more steps. Further, the INACTIVE mode may be switched to the idle mode through the release procedure after the resume process (2-20). The switching between the connected mode and the idle mode follows the existing LTE technology. That is, the switching between the modes is performed through an establishment or release procedure (2-25).

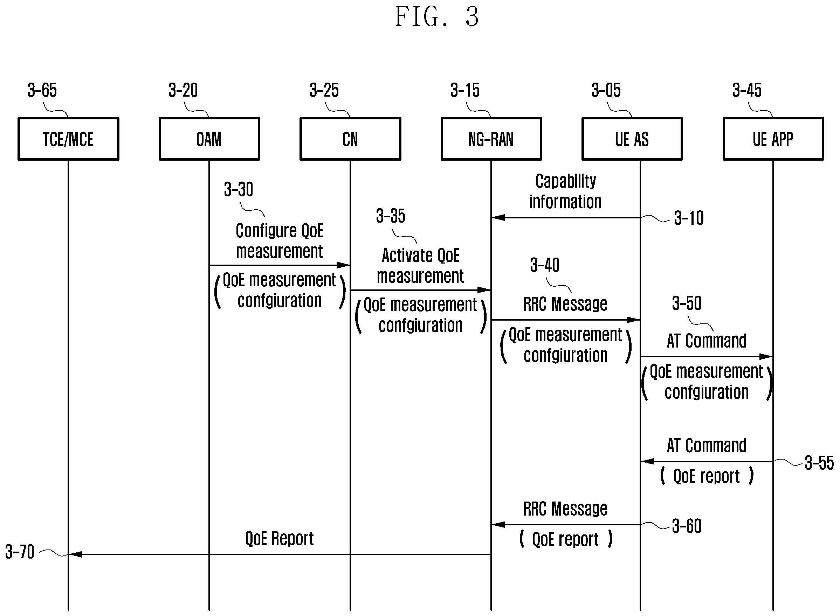

FIG. 3 is a message flow diagram illustrating a procedure for configuring/reporting signaling-based QoE measurement in the disclosure.

An access stratum (AS) 3-05 of the UE may transmit information (e.g., qoe-Streaming-MeasReport, qoe-MTSI-MeasReport, qoe-VR-MeasReport) indicating whether it supports QoE measurement for each service type (e.g., streaming, MTSI, VR) to a base station (or NG-RAN) 3-15 through a UE capability message (e.g., UECapabilityInformation) (3-10). Before sending the UE capability message, the base station may send a message (e.g., UECapabilityEnquiry) on a request for the UE capability message. Further, the UE may report to the base station whether it supports RAN visible QoE measurement (e.g., ran-VisibleQoE-Streaming-MeasReport, ran-VisibleQoE-VR-MeasReport) for each service type (e.g., streaming, VR) through the UE capability message. Further, the UE may report through the UE capability message whether it supports UL RRC segmentation for a QoE report message (e.g., ul-MeasurementReportAppLayer-Seg). The UE capability message may include the following ASN.1 information and related parameter descriptions.

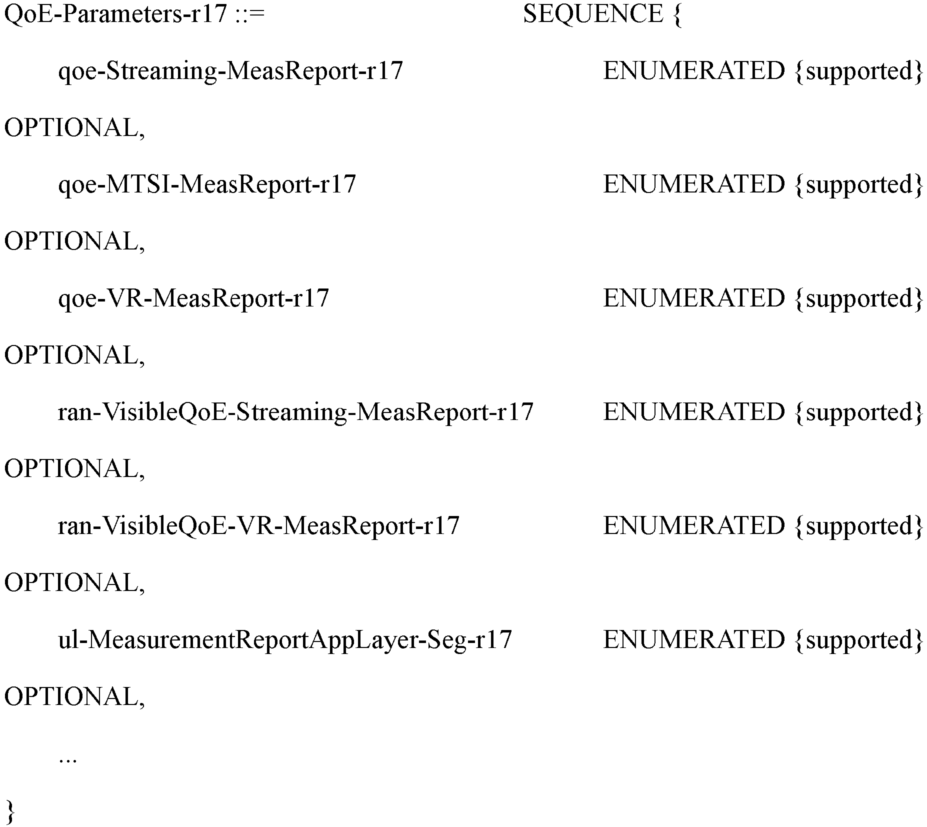

### 4.2.20 QoE measurement parameters

| **Definitions for parameters** | **Per** | **M** | **FDD-TDD** | **FR1-FR2** |
|---|---|---|---|---|
| | | | **DIFF** | **DIFF** |
| ***goe-Streaming-MeasReport-r17*** | UE | No | No | No |
| Indicates whether the UE supports NR QoE Measurement Collection for streaming services, see TS 26.247 [29]. | | | | |
| ***qoe-MTSI-MeasReport-r17*** | UE | No | No | No |
| Indicates whether the UE supports NR QoE Measurement Collection for MTSI services, see TS 26.114 [30]. | | | | |
| ***qoe-VR-MeasReport-r17*** | UE | No | No | No |
| Indicates whether the UE supports NR QoE Measurement Collection for VR services, see TS 26.118 [31]. | | | | |
| ***ran- VisibleQoE-Streaming-MeasReport-r1*7** | UE | No | No | No |
| Indicates whether the UE supports RAN visible QoE Measurement Collection for streaming services. | | | | |
| ***ran-VisibleQoE-VR-MeasReport-r17*** | UE | No | No | No |
| Indicates whether the UE supports RAN visible QoE Measurement Collection for VR services. | | | | |
| ***ul-MeasurementReportAppLayer-Seg-r17*** | UE | No | No | No |
| Indicates whether the UE supports RRC segmentation of the MeasurementReportAppLayer message in UL, as specified in TS 38.331 [9]. | | | | |

Service types that may be supported in LTE may support streaming and multimedia telephony service for IP multimedia subsystem (IMS) (MTSI), and in addition, NR defined the support for virtual reality (VR) in Rel-17 and in the future, release may additionally support multimedia broadcast multicast services (MBMS), extended reality (XR), and the like.

An operations administration and maintenance (OAM) 3-20 provides QoE measurement configuration information to a core network (CN) 3-25 (3-30). The CN that has received configuration information may transmit the configuration information to the base station, thereby activating QoE measurement (3-35). The base station that has received the configuration information may transmit QoE configuration information to the UE AS through an RRC message (e.g., RRCReconfiguration or RRCResume message) (3-40). The RRC message may include the following IE (APPLayerMeasConfig), and the related parameter descriptions may be as follows.

### - AppLayerMeasConfig

The IE *AppLayerMeasConfig* indicates configuration of application layer measurements.

### AppLayerMeasConfig information element

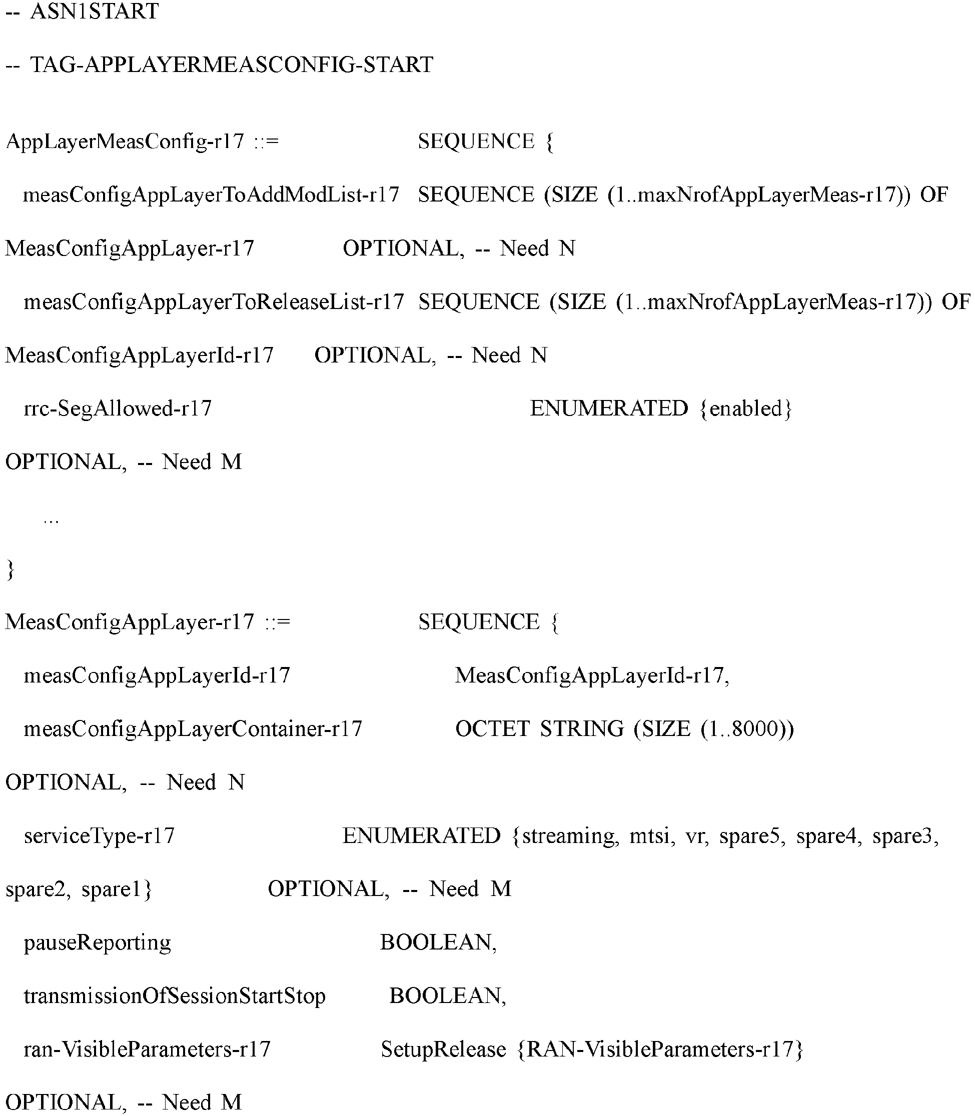

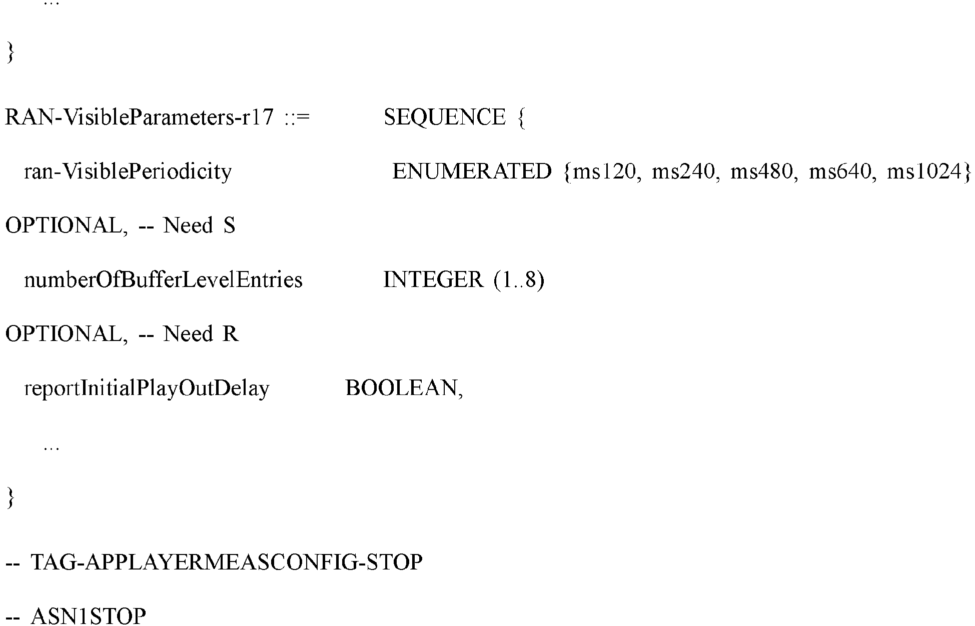

| ***AppLayerMeasConfig* field descriptions** |
|---|
| ***measConfigAppLayerContainer*** |
| The field contains configuration of application layer measurements, see Annex L (normative) in TS 26.247 [XX], clause 16.5 in TS 26.114 [YY] and TS 26.118 [ZZ]. |
| ***numberOfBufferLevelEntries*** |
| The field contains the maximum number of buffer level entries that can be reported for RAN visible application layer measurements. |
| ***pauseReporting*** |
| The field indicates whether the transmission of measurementReportAppLayerContainer is paused or not. |
| ***ran- VisiblePeriodicity*** |
| The field indicates the periodicity of RAN visible reporting. Value ms120 indicates 120 ms, value ms240 indicates 240 ms and so on. If no value is indicated and the UE is configured with RAN visible reporting, the same periodicity as indicated in the *measConfigAppLayerContainer* is used. |
| ***reportInitialPlayoutDelay*** |
| The field indicates whether the UE shall report Initial Playout Delay for RAN visible application layer measurements. |
| ***rrc-SegAllowed*** |
| This field, when received in *MeasConfigAappLayerMeasConfigList,* indicates that RRC segmentation *of MeasurementReportAppLayer* is allowed. It may be present only if the UE supports RRC message segmentation. |
| ***serviceType*** |
| Indicates the type of application layer measurement. Value streaming indicates Quality of Experience Measurement Collection for streaming services (see [XX]), value mtsi indicates Quality of Experience Measurement Collection for MTSI (see [YY]). value vr indicates Quality of Experience Measurement Collection for VR service (see [ZZ]). The network always configures *service Type* when application layer measurements are initially configured and at *fullConfig.* |
| ***transmissionOfSessionStartStop*** |
| The field indicates whether the UE shall transmit indications when sessions in the application layer start and stop. The UE transmits a session start indication upon configuration of this field if a session already has started in the application layer. |

The operation of the UE AS that has received this may be as follows.

### 5.3.5.x Application layer configuration

The UE shall:
1> if *measConfigAppLayerToAddReleaseList* is included in *appLayerMeasConfig* within *RRCReconfiguration* or *RRCResume:*
   2> for each *measConfigAppLayerId* value included in the *measConfigAppLayerToReleaseList:*
   3> forward the *measConfigAppLayerId* and inform upper layers about the release of the application layer measurement configuration including any RAN visible configuration;
   3> discard any received application layer measurement report received from upper layers;
   3> consider itself not to be configured to send application layer measurement report for the *measConfigAppLayerId.*
1> if *measConfigAppLayerToAddModList* is included in *appLayerMeasConfig* within *RRCReconfiguration* or *RRCResume:*
   2> for each *measConfigAppLayerId* value included in the *measConfigAppLayerToAddModList:*
   3> if *measConfigAppLayerContainer* is included for the corresponding *MeasConfigAppLayer* configuration:
      4> forward the *measConfigAppLayerContainer,* the *measConfigAppLayerId* and the *serviceType* to upper layers considering the *serviceType*;
   3> consider itself to be configured to send application layer measurement report for the *measConfigAppLayerId* in accordance with 5.7.x;
   3> forward the *transmissionOfSessionStartStop,* if received, to upper layers;
   3> if *ran-VisibleParameters* is set to setup and the parameters have been received;
      4> forward the *measConfigAppLayerId,* the *ran-VisiblePeriodicity,* the *numberOfBufferLevelEntries* and the *reportInitialPlayOutDelay* to upper layers considering the *serviceType*;
   3> else if *ran-VisibleParameters* is set to release:
      4> forward the *measConfigAppLayerId* and inform upper layers about the release of the RAN visible application layer measurement configuration;
   3> if *pauseReporting* is set to *true:*
      4> if at least one segment, but not all segments, of a segmented *MeasurementReportAppLayer* message containing an application layer measurement report associated with the *measConfigAppLayerId* has been submitted to lower layers for transmission:
         5> submit the remaining segments of the *MeasurementReportAppLayer* message to lower layers for transmission;
      4> suspend submitting application layer measurement report containers to lower layers for the application layer measurement configuration associated with the *meαsConfigAppLαyerId*;
      4> store any previously or subsequently received application layer measurement report containers associated with the *measConfigAppLayerId* for which no segment, or full message, has been submitted to lower layers for transmission;
   3> else if *pauseReporting* is set to *false* and if transmission of application layer measurement report containers has previously been suspended for the application layer measurement configuration associated with the *measConfigAppLayerId*:
      4> submit stored application layer measurement report containers to lower layers for the application layer measurements configuration associated with the *measConfigAppLayerId*;
      4> resume submitting application layer measurement report containers to lower layers for the application layer measurement configuration associated with the *measConfigAppLayerId*;

NOTE: The UE may discard reports when the memory reserved for storing application layer measurement reports becomes full.

NOTE: The transmission of RAN visible reports is not paused when *pauseReporting* is set to *true.*

As described above, in the case of a QoE measurement configuration included in a measConfigAppLayerToAddModList, the AS layer of the UE may transmit configuration information to an upper layer or application layer (UE APP) 3-45 of the UE through an AT command (3-50). For a QoE measurement configuration included in a measConfigAppLayerToAddReleaseList, the AS layer of the UE may send an AT command that instructs to delete the stored configuration information to the APP of the UE.

The UE APP may perform QoE measurement according to the received configuration information. Further, the UE APP may report the measurement result to the UE AS through the AT command according to the configuration information (3-55). The UE AS that has received this may report the measurement result to the base station through an RRC message (e.g., MeasurementReportAppLayer message) (3-60). The UE AS may use SRB4 in order to report the QoE measurement result. The MeasurementReportAppLayer message may include the following ASN.1 information and associated parameter descriptions.

### - MeasurementReportAppLayer

The *MeasurementReportAppLayer* message is used for sending application layer m easurement report.
Signalling radio bearer: SRB4
RLC-SAP: AM
Logical channel: DCCH
Direction: UE to Network

### MeasurementReportAppLayer message

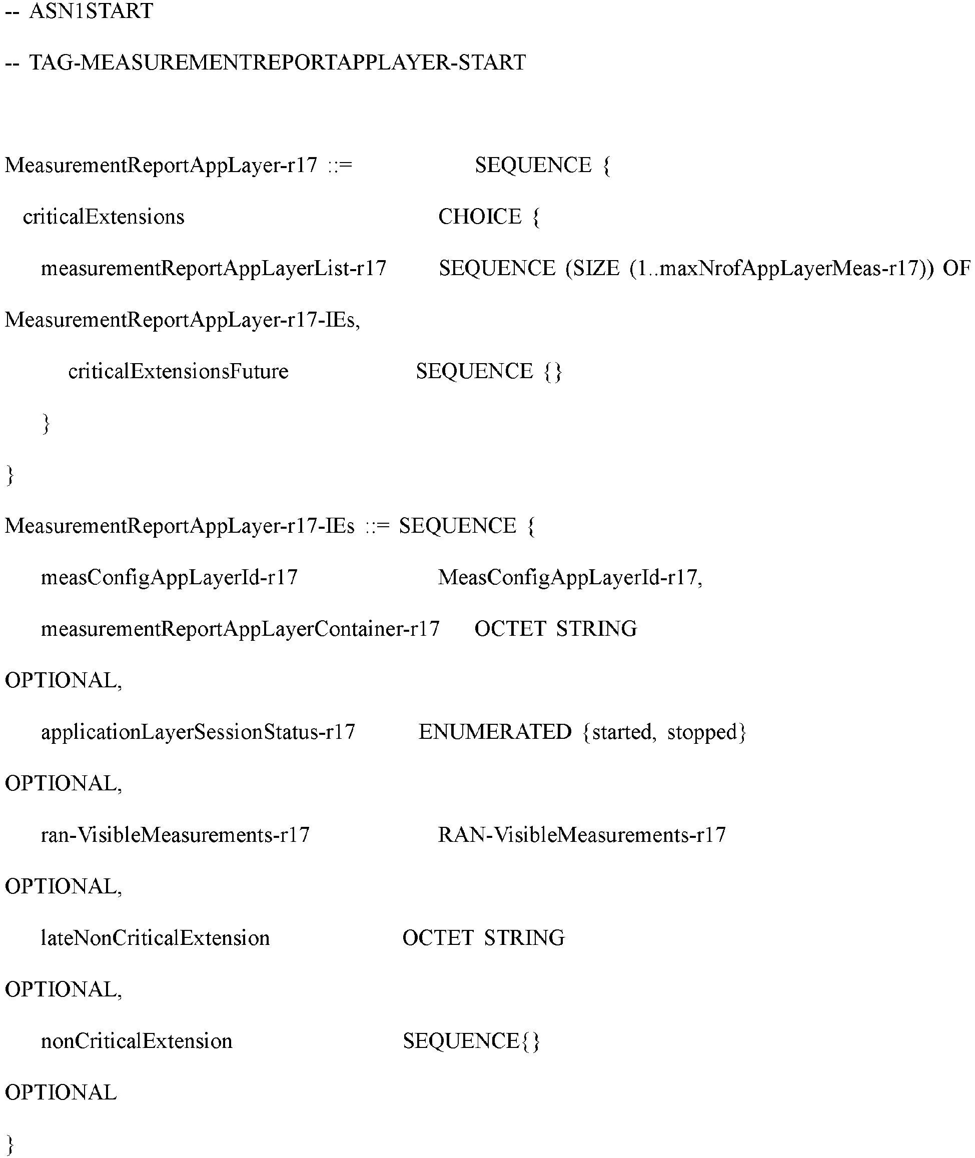

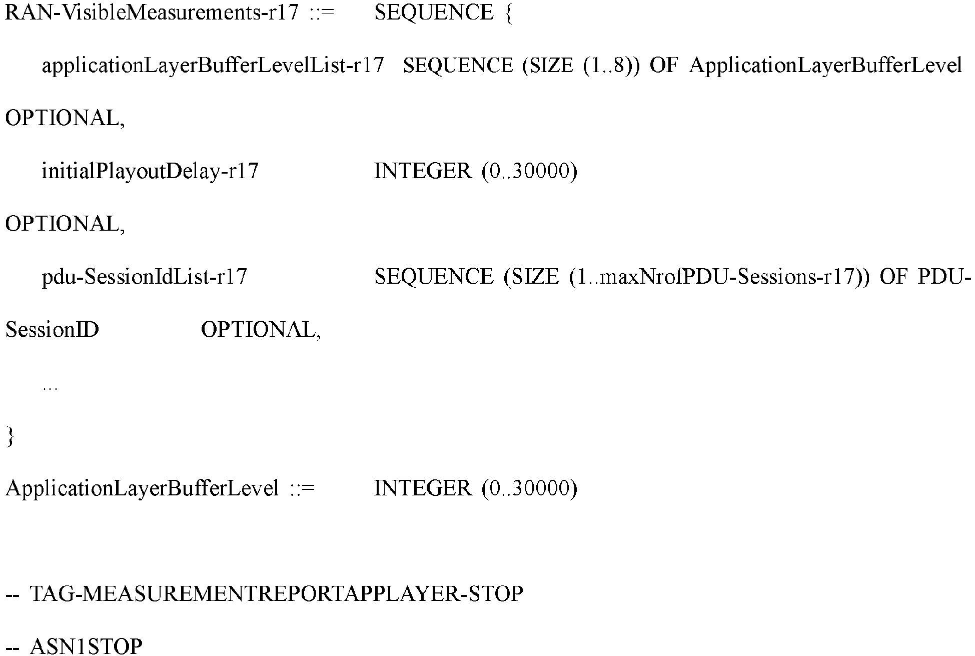

| ***MeasurementReportAppLayer* field descriptions** |
|---|
| ***applicationLayerBufferLevel*** |
| Indicates the application layer buffer level in ms. Value 1 corresponds to 10ms, va lue 2 corresponds to 20 ms and so on. If the buffer level is larger than the maxi mum value of 30000 (5 minutes), the UE reports 30000. |
| ***applicationLayerSessionStatus*** |
| Indicates that a QoE session in the application layer starts or stops. |
| ***initialPlayoutDelay*** |
| Indicates the application layer initial playout delay in ms. Value 1 corresponds to 1ms, value 2 corresponds to 2 ms and so on. If the intial playout delay is larger than the maximum value of 30000ms, the UE reports 30000ms. |
| ***measurementReportAppLayerContainer*** |
| The field contains application layer measurements, see Annex L (normative) in TS 26.247 [XX], clause 16.5 in TS 26.114 [YY] and TS 26.118 [ZZ]. |
| ***pdu-SessionIdList*** |
| Contains the identity of the PDU session, or the identities of the PDU sessions, us ed for application data flows subject to the RAN visible application layer measure ments. |

A specific UE AS procedure for reporting this may be as follows.

### 5.7.x Application layer measurement reporting

### 5.7.x.1 General

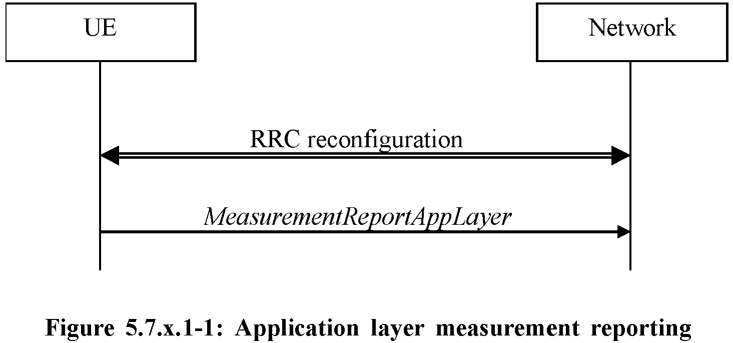

The purpose of this procedure is to send application layer measurement reports to the network.

### 5.7.x.2 Initiation

A UE capable of application layer measurement reporting in RRC_CONNECTED may ini tiate the procedure when configured with application layer measurement, i.e. when *appLayerMeasConfig* and SRB4 have been configured by the network.

Upon initiating the procedure, the UE shall:
1>for each *meαsConfigAppLayerId*:
   2>if the UE AS has received, but not sent, application layer measurement report from upper layers; and
   2> if the application layer measurement reporting has not been suspended for the *measConfigAppLayerld* associated with the application layer measurement report a ccording to clause 5.3.5.x:
      3>set the *measurementReportAppLayerContainer* in the *MeasurementReportAppLayer* message to the received value of the application layer measurement report;
   2>set the *measConfigAppLayerId* in the *MeasurementReportAppLayer* message to the value of the *measConfigAppLayerld* received together with application layer mea surement report information;
   2> if session start or stop information has been received from upper layers for the *measConfigAppLayerld:*
      3> set the *applicationLayerSessionStatus* to the received value of the application layer measurement information;
   2> if RAN visible application layer measurement report has been received from upper layers:
      3> for each *applicationLayerBufferLevel* value in the received RAN visible application layer measurement report:
         4> set the *applicationLayerBufferLevel* values in the *applicationlayerBufferLevelLIst* to the buffer level values received from the upper layer in the order with the first *applicationLayerBufferLevel* value set to the newest received buffer level value, the second *applicationLayerBufferLevel* value set to the second newest received buffer level value, and so on until all the buffer level values received from the upper layer have been assigned or the configured maximum number of *applicationLayerBufferLevel* values have been set, if any;
      3> set the *initialPlayoutDelay* to the received value in the RAN visible application layer measurement report, if any;
      3> for each PDU session ID value indicated in the received RAN visible application layer measurement report, if any:
         4> set the *PDU-SessionID* field in *the pdu-SessionldList* to the indicated PDU session ID value;
   2>if the RRC message segmentation is enabled based on the field *rrc-SegAllowed* received in *appLayerMeasConfig,* and the encoded RRC message is larger than the maximum supported size of a PDCP SDU specified in TS 38.323 [5]:
      3>initiate the UL message segment transfer procedure as specified in clause 5.7.7;
   2>else:
      3>submit the *MeasurementReportAppLayer* message to lower layers for transmission upon which the procedure ends.

The base station may transmit the measurement result report to a final server (TCE or MCE) 3-65 that collects the measurement report (3-70).

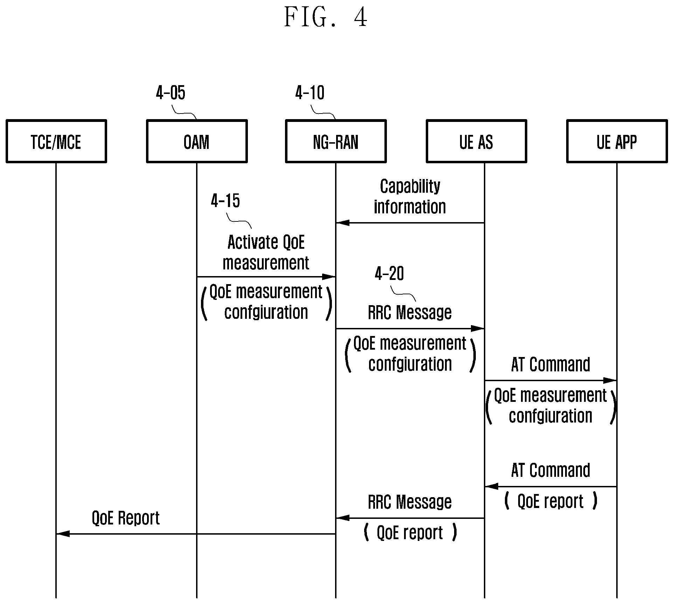

FIG. 4 is a message flow diagram illustrating a procedure for configuring/reporting management-based QoE measurement in the disclosure.

The management-based QoE configuration/report procedure is quite similar to the signaling-based procedure (FIG. 3). Therefore, in this specification, only differences from a management-based method are described below, and it may be regarded that other procedures and descriptions are the same as the description for FIG. 3. In the management-based method, an OAM 4-05 may directly send a QoE measurement configuration to a base station 4-10 without going through the CN, thereby activating QoE measurement (4-15). The base station that has received the QoE measurement configuration searches for a single UE or a plurality of UEs that meet several conditions (e.g., area scope, application layer capability, service type). The base station may transmit the QoE measurement configuration to each of the UEs through an RRC message (e.g., RRCReconfiguration message or RRCResume) (4-20). It may be regarded that other procedures and message formats are the same as the description for FIG. 3 (signaling-based method).

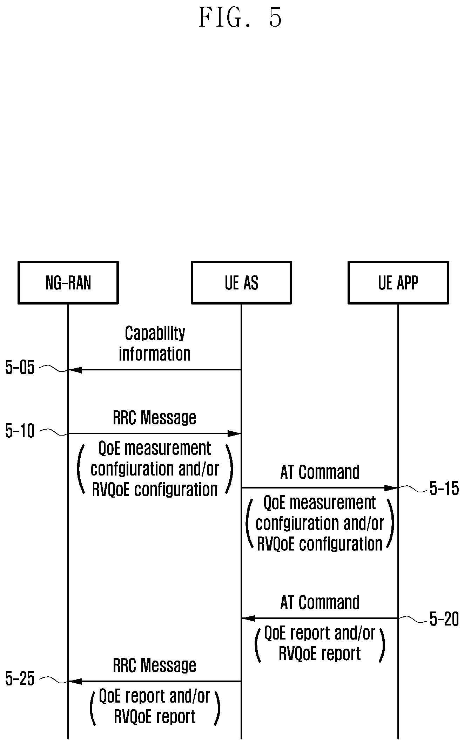

FIG. 5 is a message flow diagram illustrating configuration and report procedures of RAN visible QoE measurement.

The QoE measurements illustrated in FIGS. 3 and 4 were configured by the OAM, and the generated QoE measurement reports are collected by a TCE/MCE; thus, operators may use the QoE measurement reports for network optimization. When the UE transmits a report on the OAM-based QoE measurement to the base station and the base station receives the report, the base station may not read or understand the corresponding measurement report. In the MeasurementReportAppLayer message, a measurement report generated by an application layer of the UE is included in a measurementReportAppLayerContainer, but because it is stored in the form of OCTEC STRING, the base station or an RRC layer of the base station may not read or understand the measurement report. To solve this problem and for the base station to read the QoE measurement report and utilize it for network optimization such as radio resource management, 3GPP defined and introduced RAN visible QoE (RVQoE) measurement. First, the UE may report to the base station whether it supports RVQoE measurement for each service type (e.g., streaming, VR) (5-05). In this case, a UECapabilityInformation message may be used. For a streaming service, the UE may configure a ran-VisibleQoE-Streaming-MeasReport-r17 parameter, and for a VR service, the UE may configure a ran-VisibleQoE-VR-MeasReport-r17 parameter. The RVQoE measurement configuration may be generated by the base station and be configured to the UE (5-10). In this case, the RVQoE measurement configuration may be transferred together with an OAM-based QoE measurement configuration. The RVQoE measurement configuration may be configured or released with a ran-VisibleParameters-r17 parameter. The parameter may include an RAN-VisibleParameters IE, through which the base station may configure or instruct an RVQoE measurement report period (ran-VisiblePeriodicity), the number of maximum reportable buffer levels (numberOfBufferLevelEntries), and whether to report an initial playout delay (reportInitialPlayoutDelay) of the UE to the UE or an APP of the UE. The AS layer of the UE may transmit such configuration information to the APP layer of the UE (5-15). In this case, the RVQoE measurement configuration may be transmitted together with the OAM-based QoE measurement configuration. The APP of the UE may perform QoE measurement based on the RVQoE measurement configuration information to generate an RVQoE measurement report and transmit it to the AS layer of the UE (5-20). In this case, the RVQoE measurement report may be transmitted together with the OAM-based QoE measurement report. The AS layer of the UE that has received the measurement report may transmit it to the base station (5-25). In this case, the RVQoE measurement report may be transmitted together with the OAM-based QoE measurement report. In 5-25, the RVQoE measurement report may be transmitted through an RAN-VisibleMeasurements IE in a MeasurementReportAppLayer message. The IE may include information such as a buffer level list of the APP layer (applicationLayerBufferLevelList), an initial playout delay (initialPlayoutDelay), an involved PDU session ID list (pdu-SessionIdList), and the like. The base station may read the RVQoE report and utilize it to perform network optimization. For example, by allocating more radio resources to the UE experiencing poor QoE for a specific service, QoE of the UE may be improved.

A detailed description related to RAN visible QoE measurement may be as follows.

### X.4 RAN Visible QoE Measurements

RAN visible QoE measurements are configured by the NG-RAN node, where a subset of QoE metrics is reported from the UE as an explicit IE readable by the NG-RAN node. RAN visible QoE measurements (e.g., RAN visible QoE metrics, RAN visible QoE values) could be utilized by the NG-RAN node for network optimization. RAN visible QoE measurements are supported for the DASH streaming and VR services. The NG-RAN node configures the RAN visible QoE measurement to collect all or some of the available RAN visible QoE metrics, where the indication of metric availability is received from the OAM or CN. The set of available RAN visible QoE metrics is a subset of the metrics which are already configured as part of QoE measurement configuration encapsulated in the transparent container. The PDU session ID(s) corresponding to the service that is subject to QoE measurements can also be reported by the UE along with the RAN visible QoE measurement results.

RAN visible QoE measurements can be reported with a reporting periodicity different from the one of regular QoE. If there is no reporting periodicity defined in the RAN visible QoE configuration, RAN visible QoE reports should be sent together with the legacy QoE reports.

RAN visible application layer measurement is supported only for streaming and VR services. The gNB can use RAN visible application layer measurement configurations to instruct the UE to collect application layer measurements for RRM purposes. Multiple simultaneous RAN visible application layer measurements configuration and reports can be supported for RAN visible application layer measurement, and each RAN visible application layer measurement configuration and report is identified by the same *measConfigAppLayerId* as the application layer measurement configuration and measurement report. gNB configures the required RAN visible QoE metrics in the RAN visible application measurement configuration for the UE to report. After receiving the RAN visible application layer measurement configuration, the UE RRC layer forwards the configuration to the application layer, indicating the service type, the RRC identifier and the periodicity. RAN visible application layer configuration can only be configured if there is a corresponding application layer measurement configuration for the same service type configured at the UE. The application layer sends the RAN visible application layer measurement report associated with the RRC identifier to the UE's AS layer. UE can send both RAN visible application layer measurement reports and the application layer measurement reports to the gNB in the same *MeasurementReportAppLayer* message. gNB can release one or multiple RAN visible application layer measurement configurations from the UE in one RRC message at any time.

The UE still reports the configured RAN visible application layer measurements, even though the corresponding non RAN visible application layer measurement reporting is paused.

The following description is specified in the 3GPP Release 18 Work Item Description (WID, RP-221803) document for QoE.

### 3 Justification

The Rel-18 QoE enhancement is aiming to introduce enhancements to the existing NR QoE framework and to introduce the support for new types of 5G services, such as AR, MR, cloud gaming, as well as the support for RRC_CONNECTED, RRC_INACTIVE and RRC_IDLE for the MBS service.

In Rel-17, the basic mechanisms for triggering, configuration, collection, mobility support and reporting of QoE measurement have been specified. The features, including the enhancements of the specified features that were discussed but not fully completed in Rel-17 should be discussed and completed in Rel-18.

MBS service (i.e. broadcast and multicast) has been specified in LTE and NR. It is a very important service. The NR QoE is enhanced to support for RRC_CONNECTED, RRC_INACTIVE and RRC_IDLE state for MBS service in collaboration with SA4. The mechanism of how to configure and report legacy QoE and RAN visible QoE measurements, and how to align the QoE with radio related measurements should be specified in Rel-18.

As NR-DC is one of the important commercial deployment scenarios for 5G networks, it is critical to support it in the NR QoE framework. Therefore, Rel-18 QoE should address the support for QoE measurement configuration, measurement reporting over MN/SN for NR-DC scenario, as well as support for RAN visible QoE report over MN/SN, mobility continuity, the alignment of QoE report and MDT, etc. The high speed scenario is one of important scenarios. But the current specifications are not supporting the network to collect QoE measurement for high speed scenarios, e.g. high speed train, and these part should be discussed and specified in Rel-18.

On the basis of Rel-17 NR QoE, some features have not been discussed extensively, and these features have been considered as part of the leftover issues in Rel-18, e.g. Per-slice QoE measurement enhancement, RAN visible QoE reporting enhancement, the enhancement on QoE reporting handling for RAN overload.

### 4 Objective

### 4.1 Objective of SI or Core part WI or Testing part WI

The detailed objectives of the work item are as follows:
- Support for new service type, such as AR, MR, MBS and other new service type defined or to be supported by SA4. Support RAN-visible parameters for the additional service types, and the existing service if needed, and the coordination with SA4 is needed [RAN3, RAN2].
   - Specify the new service and the existing service defined or to be supported by SA4, combined with high mobility scenarios, e.g., High Speed Trains.
- Specify for QoE measurement configuration and collection in RRC_INACTIVE and RRC_IDLE states for MBS, at least for broadcast service [RAN3, RAN2].
   - Specify the mechanism to support the alignment of the existing radio related measurement and QoE reporting.
- Specify to support for QoE in NR-DC, e.g. enable QoE reporting via SN [RAN3, RAN2].
   - Specify the QoE configuration, and measurement reporting over MN/SN for NR-DC architecture, and specify the QoE measurement reporting over the other DC leg in order to maintain the reporting continuity.

Note 1: The QoE measurements are not performed separately for each leg.
- Support RAN-visible QoE and radio related measurement configuration and reporting in NR-DC scenarios.
- Specify the QoE measurement continuity in mobility scenarios in NR-DC.
- Specify the alignment of QoE measurements (including legacy QoE and RAN visible QoE measurements) and radio related measurement in NR-DC.
   - Left-over features from Rel-17, as well as the enhancements of existing features which are not included in Rel-17 normative phase, should be supported in Rel-18 if consensus on benefits are reached [RAN3, RAN2].
- Specify per-slice QoE measurement configuration enhancement.
- Specify RAN visible QoE enhancements for QoE value, RAN visible QoE trigger event, RAN visible QoE Report over F1.
- Specify QoE reporting handling enhancement for overload scenario.
   - Support the continuity of legacy QoE measurement job for streaming and MTSI service during intra-5GC inter-RAT handover process [RAN2, RAN3].

In the WID, through sentences "The Rel-18 QoE enhancement is aiming to introduce enhancements to the existing NR QoE framework and to introduce the support for new types of 5G services, such as AR, MR, cloud gaming, as well as the support for RRC _CONNECTED, RRC_INACTIVE and RRC_IDLE for the MBS service." and "Support for new service type, such as AR, MR, MBS and other new service type defined or to be supported by SA4. Support RAN-visible parameters for the additional service types, and the existing service if needed, and the coordination with SA4 is needed [RAN3, RAN2].", 3GPP plans to support QoE measurement for service types such as augmented reality (AR), mixed reality (MR), and cloud gaming. AR, MR, virtual reality (VR), and/or cloud gaming may be a service(s) or concept(s) included in extended reality (XR). Accordingly, the service referred to as XR in this specification may mean AR, MR, VR, and/or cloud gaming.

3GPP standard document TR 23.700-60 is a study document of an SA2 working group for supporting an XR service. According to the standard document, a packet data unit (PDU) set is defined as follows.

**PDU Set:** A PDU Set is composed of one or more PDUs carrying the payload of one unit of information generated at the application level (e.g. a frame or video slice for XRM Services, as used in TR 26.926 [27]). In some implementations all PDUs in a PDU Set are needed by the application layer to use the corresponding unit of information. In other implementations, the application layer can still recover parts all or of the information unit, when some PDUs are missing.

A PDU set may be composed of one or more interrelated PDUs. In the case that some (e.g., one PDU) of them are lost, data corresponding to the entire PDU set may not be recovered. For example, in order for a UE to restore a video frame, it may be necessary to successfully receive a plurality of specific PDUs received from a base station. In this case, the plurality of PDUs may be information constituting one video frame and be included in one PDU set. When some of the PDUs are lost, the UE may not be able to recover the entire video frame and reproduce it. That is, when some PDUs in a PDU set are lost, data in the entire PDU set may become useless. Efficient network resource management is essential for supporting XR services. In XR, a high data transmission speed is required to support services such as high-definition 3D video information, and unlike simple streaming services, fast short latency may be required so that the user does not experience a delayed service because transmission data changes according to the interaction between an XR server and an XR user or between XR users. To this end, resource management in units of a PDU set is required. For example, instead of transmitting, to the UE, the remaining PDUs of a PDU set that cannot be recovered by the UE because some PDUs are lost, the base station may transmit more quickly other PDU sets utilizing the corresponding radio resources. Alternatively, in the case that some PDUs in a PDU set are lost and other PDUs are received without a problem, the base station may retransmit the lost PDUs with priority over other data, thereby enabling the UE to recover quickly the corresponding PDU set.

According to the standard document, the definition of multi-modal data or traffic is as follows.

**Multi-modal Data:** Multi-modal Data is defined to describe the input data from different kinds of devices/sensors or the output data to different kinds of destinations (e.g. one or more UEs) required for the same task or application. Multi-modal Data consists of more than one Single-modal Data, and there is strong dependency among each Single-modal Data. Single-modal Data can be seen as one type of data.

In XR, a user or UE may simultaneously receive data using several senses in order to receive the same one service. This is referred to as multimodal data, which may be composed of a plurality of single modal data. For example, a user performing cloud gaming may receive visual video streaming data through VR glasses, which may be single modal data. At the same time, the user may receive vivid game sound through an earphone or headset, which may be another single modal data. Further, at the same time, the user may receive tactile information occurring in virtual reality during the game (e.g., tactile information when the user picks up an object in virtual reality, or vibration information when the user fires a gun) through XR game gloves, and this may also be single modal data. That is, for one XR game service, the user may receive a plurality of single modal data (i.e., multi-modal data), and when single modal data thereof is lost (e.g., loss of video data), QoE in which the user feels for the corresponding service may be severely degraded, and other single modal data provided at the same time may be may be meaningless data. Therefore, network resource management in units of multi-modal data may be essential for providing XR services. For example, in the case that single modal data is lost, the base station may transmit other data utilizing the corresponding radio resources instead of transmitting other single modal data associated with the single modal data to the UE. Alternatively, in the case that single modal data is lost and that other single modal data are received without any problem, the base station may retransmit lost single modal data with priority over other data, thereby enabling the UE to quickly recover multi-modal data.

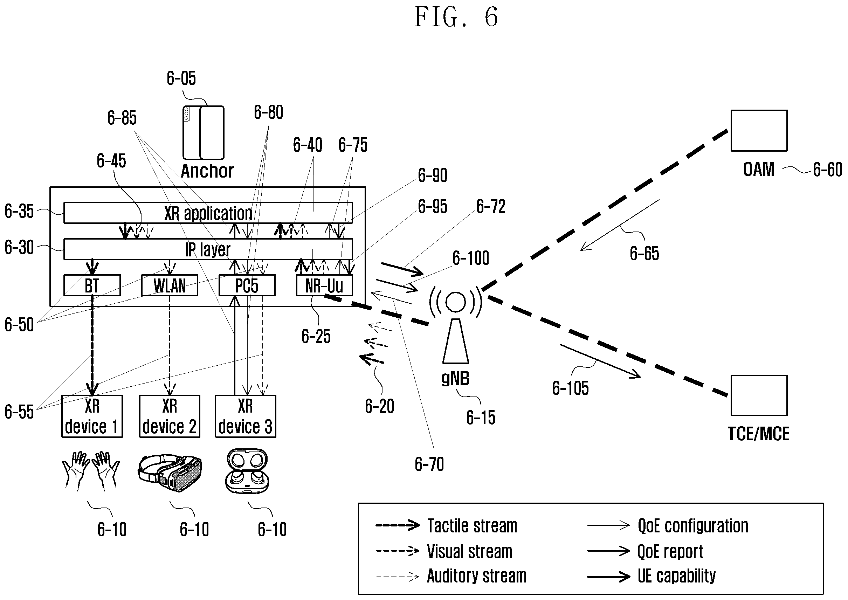

FIG. 6 is a diagram illustrating a first network scenario for supporting QoE measurement of multi-modal traffic in an embodiment of the disclosure.

In this scenario, it may be assumed that a user uses an anchor device and one or more XR devices so as to receive XR services. The anchor may be a device capable of performing cellular communication (e.g., NR, LTE, or 6G) with a base station. The anchor may be a UE that follows the 3GPP communication standard (e.g., NR, LTE, or 6G). For example, the anchor may be a smartphone or tablet PC equipped with an NR modem. The anchor may be a device capable of performing wired/wireless communication connection with XR devices 6-10. One XR device 6-10 may be a device that provides visual data (e.g., XR glasses), a device (e.g., headphone or earphone) that provides auditory data, and/or a device (e.g., headphone or earphone) that provides auditory data. Alternatively, one XR device 6-10 may be a device that provides a plurality of sensory data. Further, one XR device 6-10 may be a device used by a user for XR services (it may not be limited to a specific sense or service).

In an embodiment of the disclosure, the anchor may also be an XR device. For example, XR glasses may serve as an anchor while being equipped with an NR modem.

In an embodiment of the disclosure, an anchor 6-05 and each XR device 6-10 may be one integrated device. In this case, an application layer of the integrated device may receive multi-modal data. The application layer of the integrated device may receive a QoE measurement configuration and perform QoE measurement (e.g., QoE measurement for multi-modal data) accordingly. A QoE measurement report generated as a result of the QoE measurement may be transmitted from the application layer of the integrated device to a lower layer, and be finally transmitted to a TCE/MCE via the base station.

A base station 6-15 may receive multi-modal traffic (6-20) from an XR server and then transfer multi-modal traffic to the user (or anchor). The anchor may receive the multi-modal traffic from the base station through a cellular communication link (e.g., NR Uu interface), and use a cellular modem (e.g., NR Uu modem) 6-25 for this purpose. Within the anchor, the multi-modal traffic may be transferred to an XR application layer 6-35 via an IP layer 6-30 (6-40). Thereafter, within the anchor, the application layer may transfer the multi-modal traffic to the IP layer (6-45).

The IP layer of the anchor may transfer the multi-modal traffic to the lower layer. The anchor may be connected to each XR device to which each single modal data is to be transmitted through a wired/wireless link. For example, in this drawing, the anchor may be connected to the XR device through a Wi-Fi (WLAN) link in order to transmit video data, be connected to the XR device through a Bluetooth (BT) link in order to transmit tactile data, and be connected to the XR device through a PC5 link in order to transmit auditory data. The link used between the anchor and each XR device is not limited to the above example, and any type of wired/wireless link may be used/applied. For example, a plurality of XR devices may use a common wireless link.

The IP layer of the anchor may split multi-modal traffic to each single modal traffic and transfer the each single modal traffic to a wireless link modem associated with the each single modal traffic (6-50). Each wireless link modem of the anchor may transmit single modal traffic to each XR device through the corresponding wireless link (6-55).

In an embodiment of the disclosure, multi-modal traffic may be transferred directly from the IP layer to each wireless link modem without a transfer process from the IP layer to the application layer.

For QoE measurement of multi-modal traffic, an OAM 6-60 may transmit a QoE configuration to the base station 6-15 via the core network (CN) (6-65). The base station may transmit the QoE configuration received from the OAM and/or a RAN visible QoE configuration in which the base station wants to configure to the UE to the anchor (6-70, which corresponds to 3-40, 4-20, and 5-10). In this case, a cellular link (e.g., NR Uu interface) may be used. Before the base station transmits a QoE configuration to the anchor, the anchor may report UE capability information to the base station (6-72, which corresponds to 3-10 and 5-05). The QoE configuration received by the anchor (including the RAN visible QoE configuration) may be transmitted to the application layer via the IP layer (6-75). The application layer of the anchor may perform QoE measurement according to the QoE configuration. The application layer of the anchor may perform QoE measurement based on multi-modal traffic received from the IP layer. In order to measure QoE that the user actually experiences, although it may be more efficient for each XR device rather than the anchor to measure QoE, for this, a condition may be required that each XR device should follow the 3GPP specification (3GPP compliant). For example, a 3GPP link (e.g., NR link) modem may be required for XR devices. This is because currently, configuration/report support for QoE measurement is defined only in 3GPP NR and LTE specifications. However, for commercialization of XR services, the condition that an XR device should be 3GPP compliant may be excessive requirement. For example, the XR device may support only other wireless links (e.g., Bluetooth, Wi-Fi) that are not defined by 3GPP. In such a scenario, in order to support QoE measurement, it may be appropriate to perform QoE measurement in a 3GPP specification compliant (e.g., NR or LTE) anchor rather than in each XR device.

In an embodiment of the disclosure, a 3GPP compliant XR device (e.g., an XR device supporting a PC5 link) may support QoE measurement, and in this case, a QoE configuration may be transmitted to the corresponding XR device (e.g., XR device 3) (6-80), and the corresponding XR device may perform QoE measurement and transmit a QoE measurement report back to an upper layer (e.g., to an application layer) (6-85). The QoE measurement report may not be transmitted to the application layer, but may be transmitted only to the IP layer and be directly transmitted to the NR modem.

The application layer of the anchor that has performed QoE measurement (or that has received a QoE measurement report from the XR device) may transfer the QoE measurement report (after generating a QoE measurement report) to the IP layer (6-90). The IP layer may transfer the QoE measurement report to a cellular modem (e.g., NR Uu modem) (6-95). The anchor may transfer the QoE measurement report to the base station through the cellular link (e.g., NR Uu link) (6-100, which corresponds to 3-60 and 5-25). The base station 6-15 may use a RAN visible QoE report for network optimization, and the base station may transmit other QoE measurement reports to the TCE/MCE server (6-105).

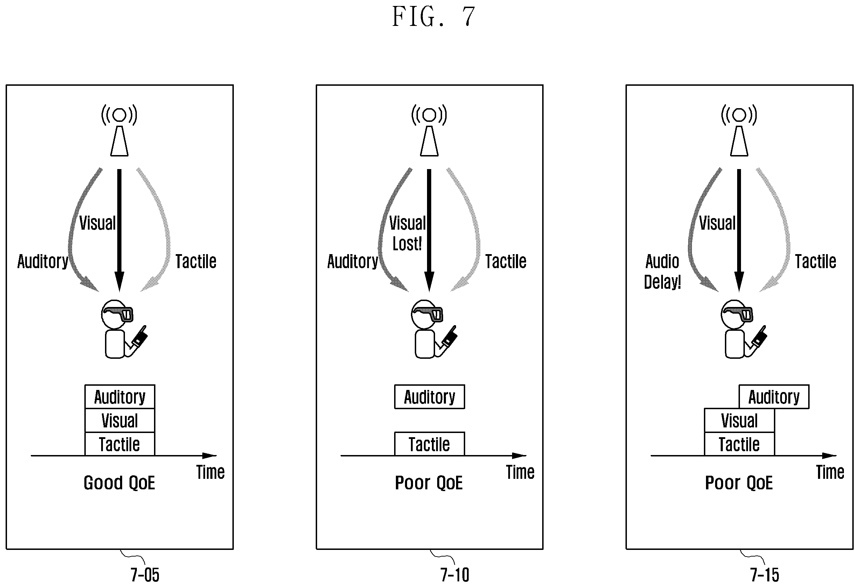

FIG. 7 is a diagram illustrating a user's QoE for multi-modal traffic in an embodiment of the disclosure.

The user may receive multi-modal traffic for an XR service. For example, when a video frame (video), audio data (audio) for the video frame, and tactile data (tactile) for the video frame and audio data are all successfully received without loss and synchronously, the user may experience good quality QoE for the XR service (7-05). However, when some single modal traffic among multi-modal traffic is lost, the user may experience poor quality QoE. For example, among a video frame (video), audio data (audio) for the corresponding video frame, and tactile data (tactile) for the corresponding video frame and audio data, when the video frame is lost, the user may experience only audio and tactile data without video, which may result in poor quality QoE experience for the user of the XR service (7-10). Further, when some single modal traffic among multi-modal traffic is not synchronous, the user may experience poor quality QoE. For example, when the user receives audio data with a delay among a video frame (video), audio data (audio) for the corresponding video frame, and tactile data (tactile) for the corresponding video frame and audio data, the user will experience sound that does not match the video and tactile, which may result in poor quality QoE experience for the user of the XR service (7-15). Therefore, in order to provide good quality QoE for the user of multi-modal traffic, each single modal traffic should be provided to the user without loss and synchronously.

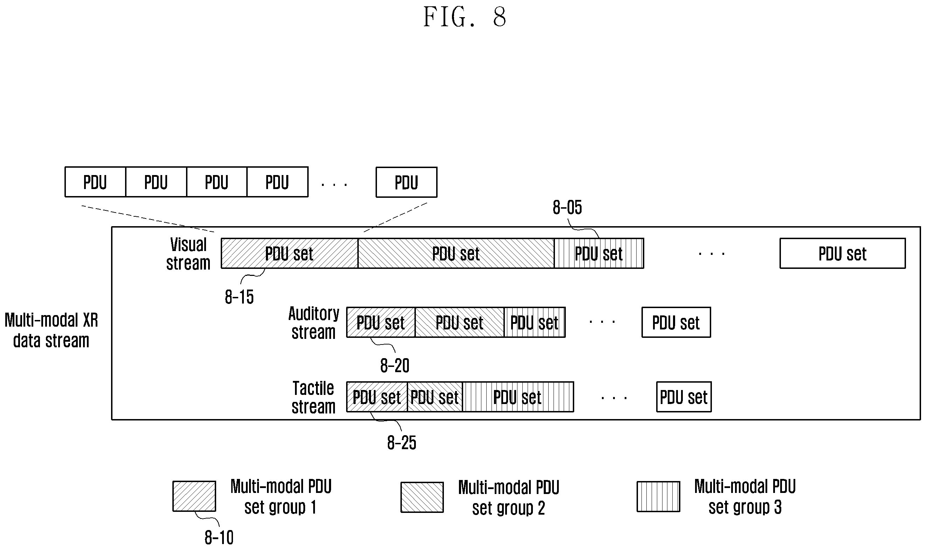

FIG. 8 is a diagram illustrating a concept of a multi-modal PDU set group in an embodiment of the disclosure.

Each single modal data may be divided in units of a PDU set (8-05). Each single modal data in multi-modal data are closely related to each other, and in the case that the each single modal data are not synchronous or that some data thereof is lost, the entire multi-modal data may become unusable information for the user. Therefore, performing QoE measurement for multi-modal data in an integrated manner rather than performing QoE measurement for each single modal data may better reflect a quality of service experienced by actual users. Therefore, for a user's QoE measurement and/or management of multi-modal data, a "multi-modal PDU set group (or MPSG)" may be defined by grouping PDU sets for each single modal data. That is, a multi-modal PDU set group may be a collection of PDU sets of single modal data that should be provided together to the user. For example, specific video frame data for an XR service may be one PDU set (8-15). Auditory data and tactile data that should be provided together with the video frame may each also be one PDU set (8-20, 8-25). Each of these three PDU sets may form one MPSG (8-10).

In an embodiment of the disclosure, instead of defining an MPSG, PDU sets (e.g., 8-15, 8-20, 8-25) of multi-modal traffic may be defined/expressed as one PDU set.

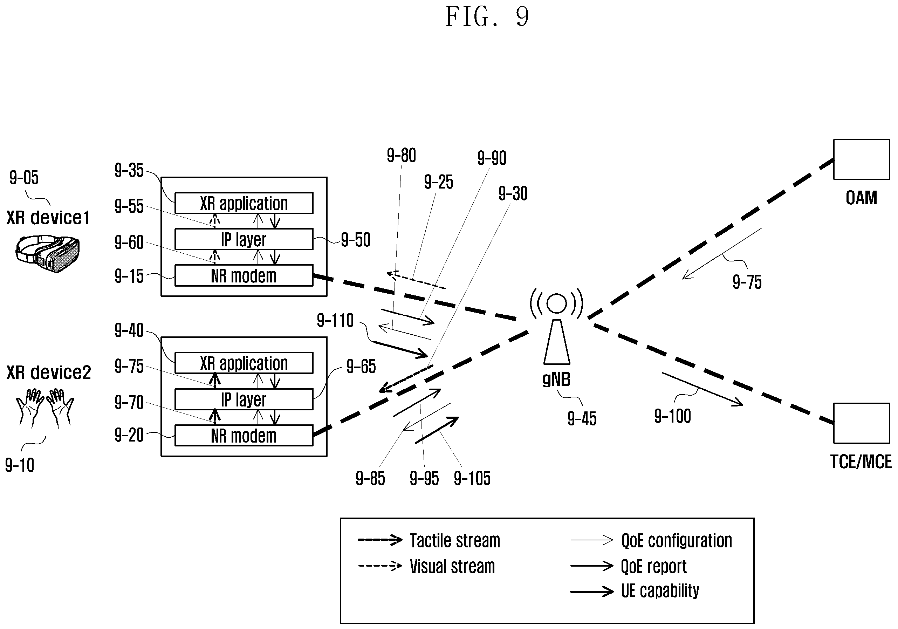

FIG. 9 is a diagram illustrating a second network scenario for supporting QoE measurement of multi-modal traffic in an embodiment of the disclosure.

Unlike FIG. 6, in FIG. 9, there is no anchor and each XR device (e.g., 9-05, 9-10) may be formed independently. The user may use one or more independent XR devices so as to receive multi-modal traffic, and each XR device may receive XR service traffic (e.g., single modal traffic 9-25, 9-30) through a separate cellular modem (e.g., NR modem, 9-15, 9-20). In each XR device, an application layer (e.g., 9-35, 9-40) may be implemented, and each application layer perform independently QoE measurement. In the case that there is no separate description for FIG. 1, the description of FIG. 6 may be applied to the description of FIG. 9 or the description of FIG. 9 may be identical/similar to the description of FIG. 6.

A base station 9-45 may transmit XR data or multi-modal data (e.g., data received from an XR server) to each XR device (9-25, 9-30). For example, visual modal data 9-25 may be transmitted through a cellular modem (e.g., NR modem) 9-15 of an XR device 1, 9-05, be transmitted to an IP layer 9-50 (9-60), and then be finally transmitted to an application layer 9-35 (9-55). For example, tactile modal data 9-30 may be transmitted through a cellular modem (e.g., NR modem) 9-20 of an XR device 2, 9-10, and be transmitted to an IP layer 9-65 (9-70), and then be finally transmitted to an application layer 9-40 (9-75). In order to configure QoE measurement of XR data received in the application layer of each XR device in this way, the OAM may transmit a QoE configuration to the base station (9-75). The base station that has received this may transmit the QoE configuration to each XR device (9-80, 9-85). Each XR device may receive QoE configuration information through a cellular modem (e.g., NR modem). The QoE configuration information received from each XR device may be transmitted to the IP layers 9-50 and 9-65, and then be finally transmitted to the application layers 9-35 and 9-40. Because each XR device receives different services, received QoE configuration information may also be different. Each QoE configuration information may be configured independently. The application layer of each XR device may perform QoE measurement according to the received QoE configuration. As a result, the application layer of each XR device may generate a QoE measurement report and report it to the base station 9-45 via the IP layers 9-50 and 9-65 and the cellular modems 9-15 and 9-20 (9-90, 9-95). The base station that has received the QoE measurement report may transmit it to a TCE/MCE server (9-100).

Before receiving a QoE configuration, each XR device may transmit UE capability information to the base station (9-105, 9-110). This may be information to be used when the base station selects a UE to download a QoE configuration. For example, after receiving a QoE configuration for an XR service or multi-modal service in the OAM or CN, the base station may transmit the corresponding configuration to the UE that supports QoE measurement for the XR service or multi-modal service to perform QoE measurement and receive measurement results.

In an embodiment of the disclosure, loss information and time synchronization information for multi-modal data may be used/defined as QoE measurement indications.

For example, the following QoE measurement indications may be used/defined for the network scenario of FIG. 6 or 9.

In order to represent QoE for a single MPSG (e.g., in the case that the anchor performs QoE measurement for multi-modal traffic in FIG. 6) or a single PDU set (e.g., in the case that each XR device in FIG. 9 performs QoE measurement for single modal traffic), the following QoE measurement indications and related information may be defined for each MPSG or PDU set. Some or all of the following information may be defined/used. One QoE measurement report may include the following information multiple times in order to include QoE measurement results for a plurality of MPSGs or PDU sets.
1) ID of an MPSG or PDU set for indicating which MPSG (or PDU set) the QoE measurement result is for.
2) Modal name for indicating which modals the corresponding MPSG (or PDU set) includes. It may indicate one or more modals. For example, it may be configured to visual, auditory, or tactile.
3) ID of a PDU set for each single modal traffic included in the corresponding MPSG
4) Whether the corresponding MPSG (or PDU set) was successfully received. In the case of the MPSB, if all PDU sets of each single modal traffic have been received successfully, success may be indicated, and in the case that even a PDU set of at least one single modal traffic is lost, failure may be indicated.
5) A modal not successfully received within the corresponding MPSG (e.g., auditory). It may indicate one or more modals (or modal of a PDU set not successfully received).
6) PDU set ID of single modal traffic not successfully received within the corresponding MPSG. It may indicate one or more PDU set IDs (or ID of a PDU set not successfully received).
7) Modal successfully received within the corresponding MPSG. It may indicate one or more modals (or modal of a successfully received PDU set).
8) PDU set ID of single modal traffic successfully received within the corresponding MPSG. It may indicate one or more PDU set IDs (or ID of a successfully received PDU set).
9) The number (e.g., 50) of PDUs included in the PDU set (for each modal in the corresponding MPSG). In this case, it may indicate an ID of each PDU included in the PDU set. It may include a first PDU ID included in the PDU set.
10) The number (e.g., 38) of PDUs successfully received in the PDU set (for each modal in the corresponding MPSG). In this case, it may indicate an ID of the successfully received PDU.
11) The number (e.g., 12) of PDUs lost in the PDU set (for each modal in the corresponding MPSG). In this case, it may indicate an ID of the lost PDU.
12) Successful PDU reception rate (e.g., 38/50=76%) in a PDU set (for each modal within the corresponding MPSG)
13) PDU loss rate (e.g., 12/50=24%) in a PDU set (for each modal within the corresponding MPSG)
14) The difference in the reception or reproduction time point of PDU sets between modals in the corresponding MPSG. For example, it may indicate the difference in reproduction time point or time of PDU sets 8-15 and 8-20. The unit of the time difference may be a standard unit for a time such as ms. Alternatively, it may indicate a level by quantizing the time level. For example, in the case that the time difference is 0.1 ms or more and 0.2 ms or less, it may indicate a level 1, in the case that the time difference is 0.2 ms or more and 0.3 ms or less, it may indicate a level 2, and in the case that the time difference is 0.3 ms or more and 0.4 ms or less, it may indicate a level 3. The time difference may be positive/negative number according to a reference modal and a comparison modal. For example, when the PDU set of 8-15 (the reference modal) was reproduced at 10.3ms and the PDU set of 8-20 (the comparison modal) was reproduced at 10.5ms, the time difference may be +0.2ms, or conversely, when the PDU set of 8-15 (the reference modal) was reproduced at 20.6ms and the PDU set of 8-20 (the comparison modal) was reproduced at 20.3ms, the time difference may be -0.3ms. In this case, it may indicate a modal(s) for indicating which modal the time difference between. The network may configure the reference modal for time comparison.
15) The difference between the reception or reproduction time point of each modal PDU set in the corresponding MPSG and the reference time point. The reference time may be defined as a time point at which an XR service or multimodal service session starts at an application layer of the UE. Alternatively, the reference time may be defined as a time point at which a QoE configuration is received at the application or RRC layer of the UE.
16) An indicator indicating whether the time difference (in absolute value) defined in the information 14 and 15 is greater than or smaller than a specific threshold value. The threshold value may be a delay value at which the user starts to experience inconvenience for an XR service or a multi-modal service. In the case that a time difference greater than the corresponding threshold occurs, the user may experience that an inter-modal delay occurs (out-of-sync). In the case that a time difference smaller than the corresponding threshold occurs, the user may not recognize that an inter-modal delay occurs. The threshold value may be a variable value configured by the base station, AMF, or OAM, or a fixed value defined in the standard. In the information 14, the threshold value may be a value configured or defined for each modal pair. This is because a reference of a delay experienced by the user may differ for each modal pair. For example, the threshold value between a visual stream and an auditory stream may be 1 ms, and the threshold value between a visual stream and a tactile stream may be 2 ms. In the information 15, the threshold value may be a value configured or defined for each modal. For example, the threshold value between a visual stream reproduction time point and a reference time point may be 1ms, and the threshold value between a tactile stream reproduction time point and a reference time point may be 2ms.
17) In the information 16, a modal that is equal to or greater than a specific threshold, i.e., a modal that does not match time synchronization (out-of-sync), may be indicated. The network may use this information so as to synchronize the corresponding modal.
   * Because the information 14 to 17 is a value defined as a time difference between modals, it may be used in an anchor (receiving/reproducing/processing multi-modal traffic) or an application layer of an anchor (FIG. 6) that may calculate the time difference between modals. However, as illustrated in FIG. 9, in the case that each XR device receives/reproduces/processes single modal traffic, the time difference between modals may not be calculated. Therefore, in a network scenario as in FIG. 9, each XR device may define/use a timestamp of a reception or reproduction time point of single modal traffic instead of the time difference between modals (e.g., information 18 and 19).
18) A reception or reproduction time point (timerstamp) of the corresponding PDU set. It may indicate an absolute time point of each XR device.
19) Difference between a reception or reproduction time point of the corresponding PDU set and the reference time point. Each XR device may indicate a relative time difference of a reception or reproduction time point of the corresponding PDU set based on one reference time point (e.g., a time point at which a QoE measurement configuration is received, a time point at which a PDU session is started, or a time point at which a QoE measurement session is started). In an embodiment of the disclosure, the network may configure a reference time point (e.g., an expected reception or reproduction time point) for each PDU set, and the UE may use different reference time points for each PDU set. Further, the network may configure a threshold (or a fixed value defined in the standard), and if the difference between a reference time point and a reception or reproduction time point of the corresponding PDU set for each configuration PDU set is greater than or equal to the threshold, the network may indicate an out-of-sync PDU set (e.g., ID of the PDU set).

In order to represent QoE for a plurality of MPSGs (or PDU sets), the following QoE measurement indications and related information may be defined for the plurality of MPSGs (or PDU sets). Some or all of the following information may be defined/used. One QoE measurement report may include the following information one or more times.
1) The QoE measurement report may include QoE measurement information for a single MPSG (or PDU set) described above multiple times to indicate QoE measurement information for a plurality of MPSGs (or PDU sets).
2) The QoE measurement report may include an average value or sum of QoE measurement information (corresponding to the information 9, 10, 11, 12, and 13) for the single MPSG (or PDU set) described above as QoE measurement information for the MPSG. For example, a successful PDU reception rate (the information 12) in each modal PDU set in the corresponding MPSG may be calculated for a plurality of MPSGs to derive a plurality of values, and then an average PDU reception rate obtained by averaging the plurality of values may be included as QoE measurement information. For example, the number (the information 10) of PDUs successfully received in each modal PDU set in the corresponding MPSG may be calculated for a plurality of MPSGs to derive a plurality of values, and the sum of the plurality of values may be included as QoE measurement information.
3) ID of an MPSG (or PDU set) for indicating which MPSG (or PDU set) the QoE measurement result is for. Because the ID is information for a plurality of MPSGs (or PDU sets), it may be indicated with a plurality of IDs.
4) ID (or sequence number) of a starting MPSG (or PDU set) among the corresponding plurality of MPSGs (or PDU sets)
5) ID (or sequence number) of a last MPSG (or PDU set) among the corresponding plurality of MPSGs (or PDU sets).
6) The number of MPSGs (or PDU sets) belonging to the corresponding plurality of MPSGs (or PDU sets).
7) The number of successfully restored MPSGs (or PDU sets) among the corresponding plurality of MPSGs (or PDU sets). In the case that all PDU sets in the MPSG are successfully received or restored, the corresponding MPSG may be defined as successfully restored.
8) The number of MPSGs (or PDU sets) failed to be restored among the corresponding plurality of MPSGs (or PDU sets). In the case that even one PDU set in the MPSG is not successfully received or restored, it may be defined that the corresponding MPSG has failed to be restored.
9) A ratio of MPSGs (or PDU sets) successfully restored among the corresponding plurality of MPSGs (or PDU sets).
10) A ratio of MPSGs (or PDU sets) failed to be restored among the corresponding plurality of MPSGs (or PDU sets).
11) A modal name for indicating which modals each MPSG (or PDU set) includes. It may indicate one or more modals for each MPSG. Each PDU set may indicate only one modal. The corresponding plurality of MPSGs may be composed of the same modals, and in this case, instead of indicating a modal for each MPSG, it may indicate a common modal of the corresponding plurality of MPSGs.
12) The number of out-of-sync MPSGs (or PDU sets) among the corresponding plurality of MPSGs (or PDU sets). If one or more modals within an MPSG do not meet synchronization (If a time error exceeds a specific threshold), it may be defined as an out-of-sync MPSG.
13) ID(s) of out-of-sync MPSG (or PDU set) among the corresponding plurality of MPSG (or PDU set)
14) A ratio of out-of-sync MPSGs (or PDU sets) among the corresponding plurality of MPSGs (or PDU sets).

The defined QoE measurement indication or information may be included in a QoE measurement report. This may be included in procedures 3-55, 3-60, and/or 3-70, and be included in a procedure 4 identical thereto. Further, for a RAN visible QoE measurement report, this may be information included in procedures 5-20 and/or 5-25, and be information included in procedures 6-85, 6-90, 6-95, 6-100, and/or 6-105.

In order to configure the QoE measurement indication or information defined above in a QoE measurement report, an indicator requesting to include the corresponding information in the QoE measurement report may be included in the QoE configuration. Further, a threshold defined in this specification (e.g., a threshold for determining out-of-sync) may be included in the QoE configuration. Further, a reference time point (e.g., an expected reception or reproduction time point) for each PDU set may be included in the QoE configuration. This may be included in procedures 3-30, 3-35, 3-40, and/or 3-50, and be included in 4-15, 4-20, and/or an AT command transmitted from an UE AS to an UE APP. Further, for a RAN visible QoE measurement configuration, this may be information included in procedures 5-10 and/or 5-15, and be information included in procedures 6-65, 6-70, 6-75, and/or 6-80.

A procedure (3-10, capability information transmission steps of 4, 5-05 and/or 6-72) for reporting UE capabilities to the base station may define/include some or all of the following information:
1) An indicator indicating whether the UE supports XR services. If the corresponding indicator is configured to true or included in the UE capability message, it may mean that the UE supports XR services, and if the corresponding indicator is configured to false or not included, it may mean that the UE does not support XR services.
2) An indicator indicating whether the UE supports multi-modal traffic. If the corresponding indicator is configured to true or included in the UE capability message, it may mean that the UE may support or receive multi-modal traffic, and if the corresponding indicator is configured to false or not included, it may mean that the UE may not support or may not receive multi-modal traffic.
3) An indicator indicating whether the UE supports QoE measurement for multi-modal traffic. If the corresponding indicator is configured to true or included in the UE capability message, it may mean that the UE may support QoE measurement for multi-modal traffic, and if the corresponding indicator is configured to false or not included, it may mean that the UE does not support QoE measurement for multi-modal traffic.
4) Types of modals supported by the UE. One or more modals that the UE may support, be connected to, or receive may be indicated in the UE capability message.

In an embodiment of the disclosure, because the indicator and information may be variable values, they may be transmitted to the base station through a UE assistance information message rather than a UE capability message. Whenever the previously reported information and reported content change, the UE may report new information to the base station through an UE assistance information message.

In an embodiment of the disclosure, the indicator and information may be information required to the AMF; thus, they may be defined and used in NAS messages (e.g., AUTHENTICATION RESPONSE, Registration request, UL NAS TRANSPORT, SERVICE REQUEST, PDU SESSION ESTABLISHMENT REQUEST).

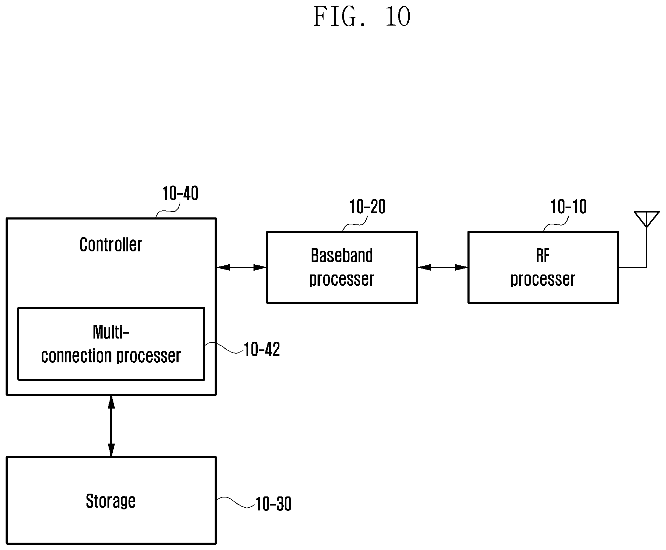

FIG. 10 is a block diagram illustrating an internal structure of a UE to which the disclosure is applied.

With reference to the above drawing, the UE includes a radio frequency (RF) processer 10-10, a baseband processer 10-20, a storage 10-30, and a controller 10-40.

The RF processer 10-10 performs a function for transmitting and receiving signals through a wireless channel, such as band conversion and amplification of signals. That is, the RF processer 10-10 up-converts a baseband signal provided from the baseband processer 10-20 into an RF band signal, transmits the RF band signal through an antenna, and down-converts the RF band signal received through the antenna into a baseband signal. For example, the RF processor 10-10 may include a transmission filter, a reception filter, an amplifier, a mixer, an oscillator, a digital to analog converter (DAC), an analog to digital converter (ADC), and the like. In the above drawing, only one antenna is illustrated, but the UE may have multiple antennas. Further, the RF processer 10-10 may include a plurality of RF chains. Furthermore, the RF processor 10-10 may perform beamforming. For beamforming, the RF processor 10-10 may adjust a phase and magnitude of each of signals transmitted and received through a plurality of antennas or antenna elements. Further, the RF processor may perform multiple-input and multipleoutput (MIMO), and receive several layers when performing the MIMO operation.

The baseband processer 10-20 performs a conversion function between a baseband signal and a bit string according to the physical layer standard of the system. For example, when transmitting data, the baseband processor 10-20 encodes and modulates a transmission bit string to generate complex symbols. Further, when receiving data, the baseband processer 10-20 demodulates and decodes the baseband signal provided from the RF processer 10-10 to restore the received bit string. For example, when transmitting data according to an orthogonal frequency division multiplexing (OFDM) scheme, the baseband processor 10-20 encodes and modulates a transmission bit string to generate complex symbols, maps the complex symbols to subcarriers, and then constitutes OFDM symbols through inverse fast Fourier transform (IFFT) operation and cyclic prefix (CP) insertion. Further, when receiving data, the baseband processer 10-20 divides the baseband signal provided from the RF processer 10-10 into OFDM symbol units, restores signals mapped to subcarriers through fast Fourier transform (FFT) operation, and then restores the received bit string through demodulation and decoding.

The baseband processer 10-20 and the RF processer 10-10 transmit and receive signals, as described above. Accordingly, the baseband processer 10-20 and the RF processer 10-10 may be referred to as a transmitter, a receiver, a transceiver, or a communication unit. Furthermore, at least one of the baseband processer 10-20 and the RF processer 10-10 may include a plurality of communication modules in order to support a plurality of different radio access technologies. Further, at least one of the baseband processor 10-20 and the RF processor 10-10 may include different communication modules in order to process signals of different frequency bands. For example, the different radio access technologies may include a wireless LAN (e.g., IEEE 802.11), a cellular network (e.g., LTE), and the like. Further, the different frequency bands may include a super high frequency (SHF) (e.g., 2.NRHz, NRhz) band and a millimeter wave (e.g., 60 GHz) band.

The storage 10-30 stores data such as a basic program, an application program, and configuration information for operation of the UE. In particular, the storage 10-30 may store information related to a second access node performing wireless communication using second wireless access technology. The storage 10-30 provides stored data according to the request of the controller 10-40.

The controller 10-40 controls overall operations of the UE. For example, the controller 10-40 transmits and receives signals through the baseband processor 10-20 and the RF processor 10-10. Further, the controller 10-40 writes and reads data in the storage 10-40. To this end, the controller 10-40 may include at least one processor. For example, the controller 10-40 may include a communication processor (CP) that controls communication and an application processor (AP) that controls upper layers such as application programs.

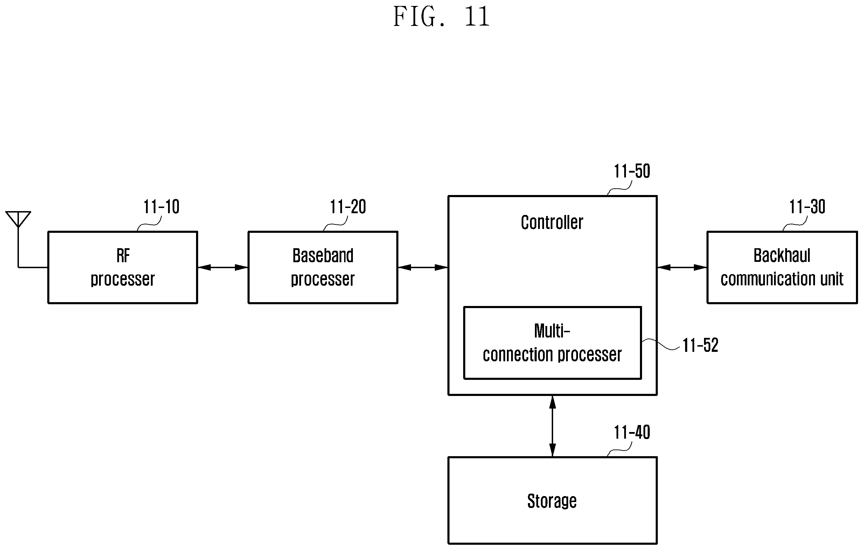

FIG. 11 is a block diagram illustrating a constitution of a base station according to the disclosure.

As illustrated in the above drawing, the base station includes an RF processer 11-10, a baseband processer 11-20, a backhaul communication unit 11-30, a storage 11-40, and a controller 11-50.

The RF processer 11-10 performs a function for transmitting and receiving signals through a wireless channel, such as band conversion and amplification of signals. That is, the RF processer 11-10 up-converts a baseband signal provided from the baseband processer 11-20 into an RF band signal, transmits the RF band signal through an antenna, and down-converts the RF band signal received through the antenna into a baseband signal. For example, the RF processor 11-10 may include a transmission filter, a reception filter, an amplifier, a mixer, an oscillator, a DAC, an ADC, and the like. In the above drawing, only one antenna is illustrated, but a first connection node may have multiple antennas. Further, the RF processer 11-10 may include a plurality of RF chains. Furthermore, the RF processor 11-10 may perform beamforming. For beamforming, the RF processer 11-10 may adjust a phase and magnitude of each of signals transmitted and received through a plurality of antennas or antenna elements. The RF processer may transmit one or more layers to perform a downlink MIMO operation.

The baseband processor 11-20 performs a conversion function between a baseband signal and a bit string according to the physical layer standard of first radio access technology. For example, when transmitting data, the baseband processor 11-20 encodes and modulates a transmission bit string to generate complex symbols. Further, when receiving data, the baseband processer 11-20 demodulates and decodes a baseband signal provided from the RF processer 11-10 to restore a received bit string. For example, when transmitting data according to an OFDM scheme, the baseband processer 11-20 encodes and modulates a transmission bit string to generate complex symbols, maps the complex symbols to subcarriers, and constitutes OFDM symbols through an IFFT operation and CP insertion. Further, when receiving data, the baseband processer 11-20 divides the baseband signal provided from the RF processer 11-10 into OFDM symbol units, restores signals mapped to subcarriers through FFT operation, and restores the received bit string through demodulation and decoding. The baseband processer 11-20 and the RF processer 11-10 transmit and receive signals, as described above. Accordingly, the baseband processer 11-20 and the RF processer 11-10 may be referred to as a transmitter, a receiver, a transceiver, a communication unit, or a RF unit.

The backhaul communication unit 11-30 provides an interface for performing communication with other nodes within the network. That is, the backhaul communication unit 11-30 converts a bit string transmitted from a main base station to another node, for example, an auxiliary base station, and a core network into a physical signal, and converts a physical signal received from another node into a bit string.

The storage 11-40 stores data such as a basic program, an application program, and configuration information for operation of the main base station. In particular, the storage 11-40 may store information on bearers allocated to the accessed UE, measurement results reported from the accessed UE, and the like. Further, the storage 11-40 may store information to be a criterion for determining whether to provide or stop multiple connections to the UE. The storage 11-40 provides the stored data according to the request of the controller 11-50.

The controller 11-50 controls overall operations of the main base station. For example, the controller 11-50 may transmit and receive signals through the baseband processer 11-20 and the RF processer 11-10 or through the backhaul communication unit 11-30. Further, the controller 11-50 writes and reads data in the storage 11-40. To this end, the controller 11-50 may include at least one processor.

## Claims

1. A method performed by a base station in a wireless communication system, the method comprising:
receiving, from a user equipment (UE), a UE capability message including information indicating whether quality of experience (QoE) measurement associated with multi-modal traffic is supported;
receiving, from an operations administration and maintenance (OAM), a message including QoE measurement configuration information associated with multi-modal traffic;
transmitting, to the UE, a first radio resource control (RRC) message including the QoE measurement configuration information;
receiving, from the UE, a QoE measurement report including a QoE measurement result performed based on the QoE measurement configuration information; and
transmitting, to a server, the QoE measurement report.

2. The method of claim 1, wherein the UE is an anchor device connected to a plurality of extended reality (XR) devices, and
wherein the multi-modal traffic is transmitted between the base station and the plurality of XR devices connected to the anchor device.

3. The method of claim 1, wherein the multi-modal traffic is composed of a multi-modal protocol data unit (PDU) set group, and
wherein the QoE measurement report comprises at least one of an identifier of the multi-modal PDU set group, an identifier of a PDU set, information on whether the multi-modal PDU set group was successfully restored, or PDU loss information.

4. The method of claim 1, wherein the UE is composed of one XR device,
wherein the multi-modal traffic is composed of a plurality of single modal traffic, and
wherein the single modal traffic is transmitted between the base station and one UE.

5. A method performed by a user equipment (UE) in a wireless communication system, the method comprising:
transmitting, to a base station, a UE capability message including information indicating whether quality of experience (QoE) measurement associated with multi-modal traffic is supported;
receiving, from the base station, a first radio resource control (RRC) message including QoE measurement configuration information associated with multi-modal traffic;
performing QoE measurement based on the QoE measurement configuration information; and
transmitting, to the base station, a QoE measurement report including the performed QoE measurement result.

6. The method of claim 5, wherein the UE is an anchor device connected to a plurality of extended reality (XR) devices, and
wherein the multi-modal traffic is transmitted between the base station and the plurality of XR devices connected to the anchor device.

7. The method of claim 5, wherein the multi-modal traffic is composed of a multi-modal protocol data unit (PDU) set group, and
wherein the QoE measurement report comprises at least one of an identifier of the multi-modal PDU set group, an identifier of the PDU set, information on whether the multi-modal PDU set group was successfully restored, or PDU loss information.

8. The method of claim 5, wherein the UE is composed of one XR device,
wherein the multi-modal traffic is composed of a plurality of single modal traffic, and
wherein the single modal traffic is transmitted between the base station and one UE.

9. A base station, comprising:
a transceiver capable of transmitting and receiving at least one signal; and
a controller coupled with the transceiver,
wherein the controller is configured to:
receive, from a user equipment (UE), a UE capability message including information indicating whether quality of experience (QoE) measurement associated with multi-modal traffic is supported,
receive, from an operations administration and maintenance (OAM), a message including QoE measurement configuration information associated with multi-modal traffic,
transmit, to the UE, a first radio resource control (RRC) message including the QoE measurement configuration information,
receive, from the UE, a QoE measurement report including a QoE measurement result performed based on the QoE measurement configuration information, and
transmit, to a server, the QoE measurement report.

10. The base station of claim 9, wherein the UE is an anchor device connected to a plurality of extended reality (XR) devices, and
wherein the multi-modal traffic is transmitted between the base station and the plurality of XR devices connected to the anchor device.

11. The base station of claim 9, wherein the multi-modal traffic is composed of a multi-modal protocol data unit (PDU) set group, and
wherein the QoE measurement report comprises at least one of an identifier of the multi-modal PDU set group, an identifier of a PDU set, information on whether the multi-modal PDU set group was successfully restored, or PDU loss information.

12. The base station of claim 9, wherein the UE is composed of one XR device,
wherein the multi-modal traffic is composed of a plurality of single modal traffic, and
wherein the single modal traffic is transmitted between the base station and one UE.

13. A user equipment (UE), comprising:
a transceiver capable of transmitting and receiving at least one signal; and
a controller coupled with the transceiver,
wherein the controller is configured to:
transmit, to a base station, a UE capability message including information indicating whether quality of experience (QoE) measurement associated with multi-modal traffic is supported,
receive, from the base station, a first radio resource control (RRC) message including QoE measurement configuration information associated with multi-modal traffic,
perform QoE measurement based on the QoE measurement configuration information, and
transmit, to the base station, a QoE measurement report including the performed QoE measurement result.

14. The UE of claim 13, wherein the UE is an anchor device connected to a plurality of extended reality (XR) devices,
wherein the multi-modal traffic is transmitted between the base station and the plurality of XR devices connected to the anchor device, and
wherein the multi-modal traffic is composed of a multi-modal protocol data unit (PDU) set group, and
wherein the QoE measurement report comprises at least one of an identifier of the multi-modal PDU set group, an identifier of a PDU set, information on whether the multi-modal PDU set group was successfully restored, or PDU loss information.

15. The UE of claim 13, wherein the UE is composed of one XR device,
wherein the multi-modal traffic is composed of a plurality of single modal traffic, and
wherein the single modal traffic is transmitted between the base station and one UE.
